# EUROPEAN PATENT APPLICATION

(11) **EP 4 005 760 A1**
(43) Date of publication of application: **01.06.2022**
(21) Application number: 20306440.7
(22) Date of filing: 25.11.2020
(51) Int. Cl.: B28B 1/00, B28B 1/50, B33Y 10/00, B33Y 40/20, B33Y 80/00, E04G 21/04, E04B 1/35, E04B 2/84, C04B 38/00, B28B 7/34

(54) **3-D PRINTING METHOD FOR MANUFACTURING MORTAR-BASED ELEMENTS**

(71) Applicant: Saint-Gobain Weber France, 94370 Sucy en Brie (FR)
(72) Inventor: NUNES LOBO, Bruno, Miguel, 5654CS EINDHOVEN (NL); DUDDA, Udo, 44869 BOCHUM (DE)
(74) Representative: Saint-Gobain Recherche

(57) **Abstract**

The invention relates to a 3-D printing method for manufacturing an element (1, 200) made of a material which comprises hydraulic binder and aggregates, said element comprising at least a primary zone (14, 206) and at least a secondary zone (16, 202, 204), the density of the material being higher in the or each primary zone (14, 206) than in the or each secondary zone (16, 202, 204), said method comprising mixing (22) a dry mortar composition with water to form a base wet mortar, conveying said base wet mortar towards a printer head (28) and, by moving said printer head, depositing superposed mortar layers (11, 12) to form said element (1, 200), wherein, before depositing the mortar layers, or the portions of mortar layers, that belong to the secondary zone (16, 202, 204), an aqueous foam is added to said base wet mortar during said conveying of the base wet mortar towards the printer head (28), and wherein at least part of the mortar layers, or portions of mortar layers, that belong to a secondary zone (16, 202, 204) support some of the mortar layers, or portions of mortar layers, that belong to a primary zone (14, 206).

## Description

The present invention relates to a 3-D printing method for manufacturing elements comprising hydraulic binder and aggregates.

3-D printing, also known as additive manufacturing, is a method in which a computer-controlled, such as a robot, manufactures three-dimensional objects by depositing a material layer by layer. Advantages of such methods include lower labor costs, lower losses of materials and the ability to manufacture objects having complex shapes. Various materials can be manufactured this way, such as polymers or metals.

3-D printing of elements made of concrete or mortars has also been proposed. Also called Contour Crafting or Cementitious Ink Printing, these techniques are now being realized in construction scale applications, and their advantages are the integration of the design, planning and construction processes coupled with an increase automation and rationalization of building processes. Savings on labour costs, lower losses and consumption of materials, eliminating formwork, shorter project lengths and capital commitment as well as an increased workspace safety are other driving factors for this technology.

In known methods, a wet mortar is continuously produced by mixing a dry mortar composition with water, is pumped and conveyed towards the printer head of a computer-controlled printer, usually a robot or a gantry, and is then deposited as a layer on a previous layer of mortar, usually by being extruded through a nozzle. The printer head is moved according to a predetermined scheme, precisely materializing e.g. complex geometries designed by architects, so as to manufacture the final object.

3D-printing methods need the layers to be supported by previous layers or by the floor, which for mortar-based elements creates some limitations in terms of available geometries or imposes special measures to be taken. Some complex shapes need the construction of temporary supports, for example made of wood, EPS, sand etc... which have to be removed after the printing steps. In the case, for example, of the construction of a building, especially of a wall, the creation of openings such as windows or doors requires specific measures. It is known, for example, to position frames or supports during the printing steps, sometimes by automatic means, in order to create a support for the layers that will form the upper part of the wall positioned over a window or a door. Patent Application n°US2014308381 teaches automatic cutting of the mortar layers soon after their deposition, in order to enable the removal of some portions of the wall after it is constructed.

The invention aims at providing a 3D-printing method that makes it possible to manufacture complex shapes quickly and in an economic way.

To this end, an object of the invention is a method according to Claim 1.

Another object of the invention is an element, such as a wall or part of a wall, obtainable or obtained by this method.

The element is preferably a construction element, especially a wall or part of a wall. It can for example be a façade wall or a splitting wall. Other examples include lintels, transoms, arches or beams. The elements can be a structural element, i.e. an element of a building that plays a structural role or that participates in the reinforcement of the building.

In the case of a wall, the element preferably has, in a vertical plane, a height and a width and, according to a normal to this vertical plane, a thickness. The element may have a rectangular parallelepiped shape. Other shapes are however possible, since the 3D-printing techniques allow for a great variety of shapes.

The invention makes it possible, starting from one and the same dry mortar, and with the same equipment, even the same nozzle, to manufacture zones having different densities, especially dense zones that will form the structure of the element, and lightweight zones, serving as a temporary support and that may be removed after printing, or serving as infills and that may remain in the structure of the element while reducing its weight.

Throughout this specification, the terms "dense" and "lightweight" can be used instead of respectively "primary" and "secondary". Hence, primary zones, layers or portions are also called dense zones, layers or portions, and secondary zones, layers or portions are also called lightweight zones, layers or portions.

The density of the mortar layers or of portions of the mortar layers is adjusted through the controlled addition of aqueous foam to the base wet mortar. When the printer head deposits layers or portions of layers belonging to a primary zone (i.e. primary, or dense, layers or portions), aqueous foam is normally not added. The wet mortar that enters the printer head is therefore the base wet mortar. On the other hand, when the printer head deposits layers or portion of layers belonging to a secondary zone (i.e. secondary, or lightweight, layers or portions), aqueous foam is added to the base wet mortar, which makes it possible to adjust the density of the final mortar. The wet mortar that arrives to the printer head is then a mixture of the base wet mortar with the aqueous foam.

The element may comprise more than one primary zone and/or more than one secondary zone. For instance, a secondary zone may be an infill, and another secondary zone can be a temporary support. As another example, a wall may comprise a first secondary zone that will form after removal an opening for a door and one or more further secondary zone(s) that will form after removal opening(s) for one or more window(s) .

The or each primary zone is normally obtained without addition of aqueous foam. The obtained mortar layers or portions of mortar layers are therefore particularly dense, so that the primary zone(s) can play a structural role.

The or each secondary zone is obtained with addition of aqueous foam, so that its density is lower than the density of the primary zone(s). It may therefore be easily removed, thanks to its brittle structure. Alternatively, it may remain in the final element and reduce its weight.

Preferably, the density of the material in the or each primary zone is 1400-2500 kg/m³, especially 2000-2400 kg/m³. The density of the material in the or each secondary zone is preferably 100-1000 kg/m³, especially 200-800 kg/m³. The density is the density after hardening (especially after 28 days).

In an embodiment, the method further comprises removing at least part of the secondary zone(s), in particular by mechanical means. Preferably, the secondary zones are entirely removed. Being lightweight, like a foam, the mortar in these zones can be easily destroyed, for example using a hammer.

As an example of this embodiment, at least part (especially all) of the secondary zone forms a temporary support for the deposition of layers belonging to the primary zone and the method further comprises removing said temporary support.

As another example of this embodiment, the element is a wall or part of a wall and removing at least part (especially all) of the secondary zone creates openings such as openings for a window or for a door.

In another embodiment, at least part of the secondary zone forms an infill. The infill remains in the final element (i.e. is not removed), and its role is mainly to reduce its weight.

Both embodiments may be combined. For example, one or more secondary zone(s) serve as temporary support(s) and one or more further secondary zone(s) are (permanent) infills.

According to a first embodiment, the method comprises depositing a plurality of mortar layers that comprise at least one portion belonging to a primary zone and at least one portion belonging to a secondary zone.

According to a second embodiment, the method comprises depositing a plurality of mortar layers belonging to a primary zone before or after depositing a plurality of mortar layers belonging to a secondary zone.

A "layer" is understood as a continuous layer obtained through one continuous printing step, corresponding to one horizontal movement of the printer head.

In the abovementioned first embodiment, at least some layers comprise one or more portions belonging to the primary zone (hereafter called "primary portions" or "dense portions") and one or more portions belonging to the secondary zone (hereafter called "secondary portions" or "lightweight portions"). During the deposition of any one of these layers, the addition of aqueous foam is alternatively started in order to deposit a secondary portion and stopped in order to deposit a primary portion.

In the abovementioned second embodiment, the layers as a whole belong either to a primary zone (and are called primary layers or dense layers) or to a secondary zone (and are called secondary layers or lightweight layers), but not to both. The method alternatively prints a plurality of layers of one zone (primary or secondary), then a plurality of layers of the other zone. For instance, the method may first print a plurality of dense layers, then the lightweight layers, and finally another plurality of dense layers. As another example, the method may fist print a plurality of lightweight layers, serving as a temporary support, and then a plurality of dense layers.

A dry mortar is understood as a powdered mixture comprising hydraulic binder and aggregates.

The hydraulic binder is preferably selected from Ordinary Portland Cements (OPC), Calcium Aluminate Cements (CAC), Calcium Sulfoaluminate Cements (CSA), unhydrated lime, hydrated lime, ground granulated blast furnace slags, fly ashes and mixtures thereof. The hydraulic binder preferably comprises OPC. OPC is even, preferably, the main or even the sole hydraulic binder.

Aggregates are preferably selected from siliceous aggregates, calcareous aggregates, such as ground limestone or sand, and mixtures thereof. Aggregates may also comprise lightweight aggregates, i.e. having a bulk density lower than 200 kg/m³. Lightweight aggregates are especially selected from perlite, vermiculite, expanded glass beads, expanded polystyrene beads, cenospheres, expanded silicates, aerogels and mixtures thereof. The maximum size of the aggregates is preferably less than or equal to 3 mm, even to 2 mm, or to 1 mm, due to the limited cross-sections of the pumping device and the nozzle. The maximum size can be determined by sieving.

The dry mortar preferably also comprises additives, especially additives selected from superplasticizers, thickeners, accelerators, retarders, and mixtures thereof. Thickeners may be organic or inorganic. The dry mortar advantageously comprises inorganic thickeners able to increase the yield stress of the mortar at rest, such as swelling clays. Accelerators and retarders are additives that accelerate or retard setting and/or hardening of the hydraulic binder.

The dry mortar composition is preferably adjusted so that the wet mortar shows a thixotropic behavior. The thixotropic behavior is preferably such that the viscosity of the wet mortar increases by a factor of 50 or more 1 second after the deposition. As a consequence, the base wet mortar has a low viscosity at higher shear rates so that they can be easily pumped and conveyed throughout the system, but show an immediate buildup of structural strength as soon as the material leaves the printing nozzle so that the layers of fresh mortars can sustain other layers even before setting and hardening. This "wet-on-wet" deposition makes it possible to improve the adhesion and bonding strength between the successive layers and in the end the mechanical properties of the final element.

The dry mortar is mixed with water in order to form the base wet mortar. Mixing water may simply be water, or may be water comprising, is solution, dispersion or suspension, one or more additives, especially organic additives, for example surfactants.

The mixing ratio, i.e. the weight ratio between the amount of mixing water and the amount of dry mortar may be adjusted according to the different zones. Alternatively, it can be the same for the primary and the secondary zone. The mixing ratio is preferably 0.05 to 0.50, especially 0.05 to 0.20.

The wet mortar has a pasty consistency and may be pumped and conveyed towards the printer head. Pumping is for example carried out by means of a screw pump. Conveying is typically made in a hose.

At least for the deposition of layers or portions of layers belonging to the secondary zone(s), an aqueous foam is added to the base wet mortar. Both are preferably mixed by means of a static mixer.

The addition of aqueous foam is preferably carried out between the pump and the printer head, or at the printer head, ideally the closest as possible to the extrusion in order to keep the structure of the foam.

The amount of foam added to the base wet mortar is preferably automatically adjusted, especially with regard to the density to achieve. During the deposition of layers or portions of layers belong to the secondary zone, the ratio (R) between the volume of added aqueous foam and the volume of base wet mortar is preferably 0.5 to 15, in particular 1 to 12.

For example, for a density (after hardening) of 100 kg/m³, the ratio R is typically around 10. For a density of 800 kg/m³, R is typically around 1.3.

The aqueous foam is for example obtained by mixing water and a foaming agent or a foam stabilizing agent, then by introducing a gas, especially air, by stirring, bubbling or by injection under pressure. The average diameter of the bubbles in the aqueous foam is preferably 400 µm or lower, especially 200 µm or lower.

The foaming agent is for example a surfactant. According to a preferred example, it is a surfactant derived from proteins or amino acids.

According to another example, the aqueous foam comprises the mixture of a cationic surfactant which is a salt (in particular a halide) of quaternary ammonium and of an anionic surfactant which is a salt (in particular an alkaline salt) of a carboxylic acid in C10-C24, for instance potassium stearate.

According to yet another example, the aqueous foam comprises nanoparticles, in particular made of silica, which have the property of stabilizing the foams. Such foams are called "Pickering foams". Silica nanoparticles may themselves be stabilized by surfactants.

Thanks to the addition of aqueous foam, the mortar comprises a large amount of gas, in particular air, trapped in a mineral matrix.

The printer head preferably comprises a nozzle, through which the wet mortar (base wet mortar, possibly with added aqueous foam) is extruded. The extrusion nozzle is preferably located less than 100 mm from the underlying layer. The printer is for example an industrial robot or a gantry carrying the printer head, and the movement of which is controlled by a computer. The computer includes in particular a storage medium in which is stored a set of data or 3D model as well as instructions, which when executed by the computer lead the latter to control the movement (trajectory, speed...) of the print head as well as other process parameters, for example the R-ratio or the mixing ratio.

The printing speed is preferably between 30 and 1000 mm/s, for example between 50 and 300 mm/s. The layer thickness (or height) typically varies from 5 to 40 mm, preferably from 10 to 20 mm. The width of the layers typically varies from 10 to 300 mm, typically from 20 to 100 mm.

The method may also comprise the addition to the wet mortar, before deposition, of an accelerator for setting and/or hardening or of a rheology modifying agent. The addition can for example be made at or near the nozzle, so just before extrusion. Alternatively, the accelerator or rheology modifying agent may be added just after the deposition, at the surface of the layers. The accelerator is for example an aluminum sulfate or a lithium salt, according to the hydraulic binder used. The rheology modifying agent makes it possible, for example, to give thixotropic properties to the wet mortar. The addition of an accelerator or rheology modifier allows for rapid consolidation of the mortar layers so that they can support the weight of the overlying layers without deformation.

The invention will be better understood with the help of non-limiting examples illustrated by Figures 1 to 11, in which:
- Figure 1 schematically shows an example of a system from implementing the method according to the invention,
- Figures 2 to 4 show the construction of a wall containing openings for a door and for a window, using a first embodiment of the invention,
- Figures 5 to 7 show the construction of the same wall, using another embodiment of the invention;
- Figures 8 to 11 illustrate the construction of a lintel.

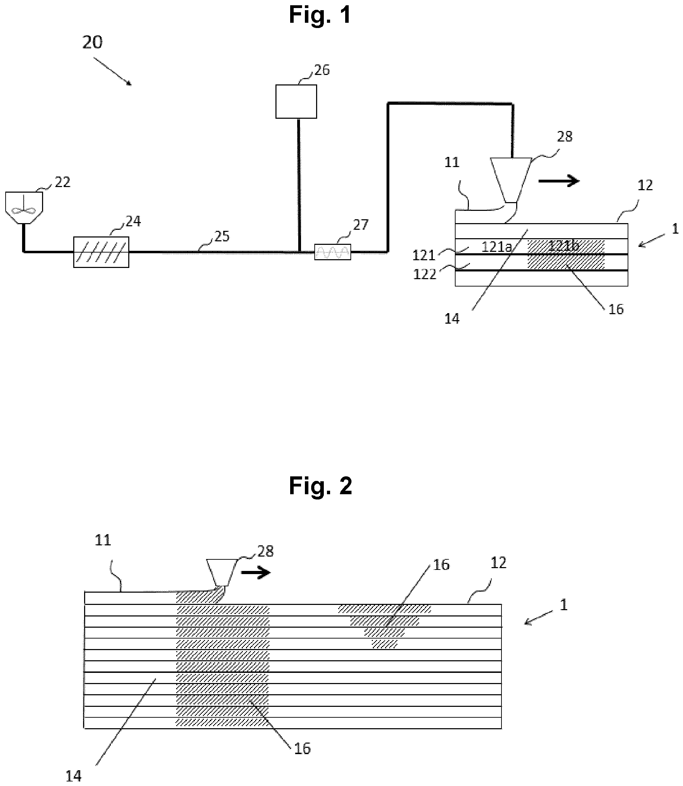

In Figure 1, an element 1 is being manufactures by the method according to the invention, using a system 20.

This system 20 comprises:
- a mixing device 22 for mixing the dry mortar with water,
- a conveying device comprising a screw pump 24 for pumping and conveying the base wet mortar in a hose 25,
- a foam-generating device 26 for generating an aqueous foam, the foam being introduced in the hose 25 after the pump 24,
- a mixing device 27, in particular a static mixer connected to the hose 25 for mixing the base wet mortar with the aqueous foam,
- a printer head 28 comprising a nozzle through which the wet mortar is extruded to deposit a mortar layer 11 on previously deposited mortar layers 12. Displacement of the printer head 28 is carried out with a computer-controlled robot or gantry (not shown).

The element 1 comprises a primary zone 14, represented in white, and a secondary zone 16, represented with hatching. In the shown example, two layers 121 and 122 comprise portions that belong the primary zone 14 and portions that belong to the secondary zone 16. For example, the mortar layer 121 comprise a portion 121a belonging to the primary zone 14 and a portion 121b belonging to the secondary zone. In this example, the addition of aqueous foam to the base wet mortar starts at the beginning of the deposition of the portion 121b and is stopped at the end of the deposition of this portion 121b.

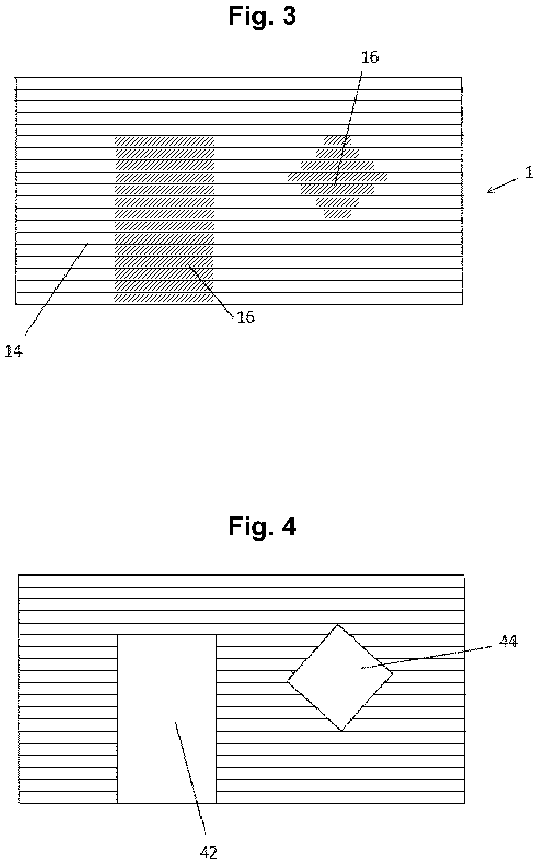

Figure 2 to 7 are schematic illustrations of the construction of a wall 1 that in its final state (shown in Figure 4) comprises openings for a door 42 and for a window 44. The figures are schematic especially since the thickness of the layers which are represented is much higher than in reality, to increase the readability of the figures.

Figures 2 to 4 illustrate a first embodiment of the invention where the addition of aqueous foam is started and stopped during the deposition of one layer, so that this layer comprises both primary portions and secondary portions.

As shown in Figure 2, the printer head 28 is being moved so as to deposit a mortar layer 11 on a previously deposited mortar layer 12. A plurality of mortar layers is progressively deposited one above the other. In Figure 2, each mortar layer comprises dense portions, belonging to primary zone 14 and one or more lightweight portions, belonging to the secondary zone 16 (with hatches on the figure). When depositing a dense portion, no aqueous foam is added to the base wet mortar, while when depositing a lightweight portion, aqueous foam is added to the base wet mortar. In this first embodiment, part of the mortar layers forming the wall therefore comprise dense portions and lightweight portions, the aqueous foam being added and stopped during the deposition of one and same layer.

Figure 3 shows the wall 1 after the printing steps have been completed. The wall 1 possesses primary zones 14 made of dense mortar and secondary zones 16 made of lightweight, porous, and fragile mortar, that can be easily removed by mechanical means, creating openings for a door 42 and for a window 44 shown in Figure 4.

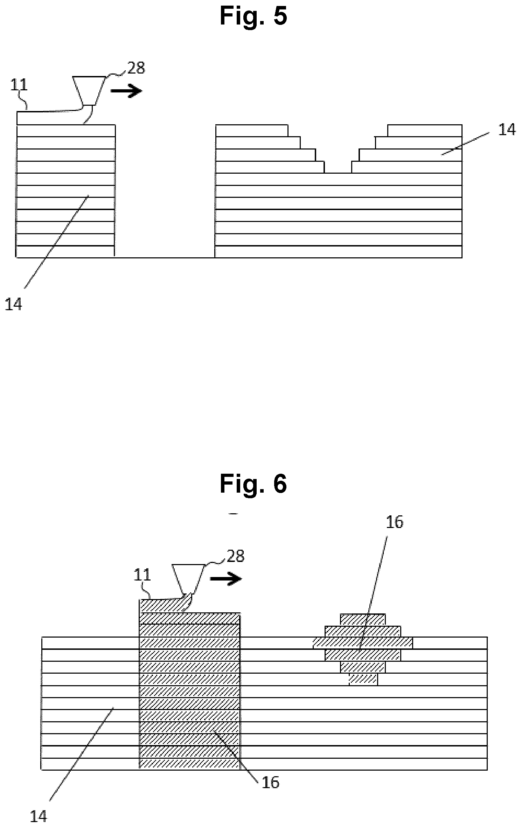

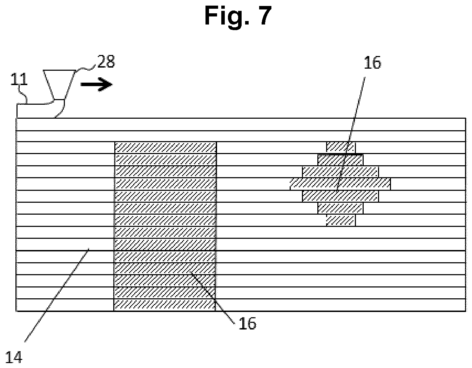

Figures 5 to 7 illustrate a second embodiment of the invention where the mortar layers belong either to the primary zone 14 or to the secondary zone 16, but not to both. As shown in Figure 5, part of the primary zone 14 is first printed, without addition of aqueous foam. The dense layers thus printed will be used to support part of the secondary zone 16, as shown in Figure 6, where the lightweight layers are printed, with addition of aqueous foam. Figure 7 then shows the finishing of the primary zone 14, without addition of aqueous foam. By removal of the secondary zones 16, openings are created as shown in Figure 4.

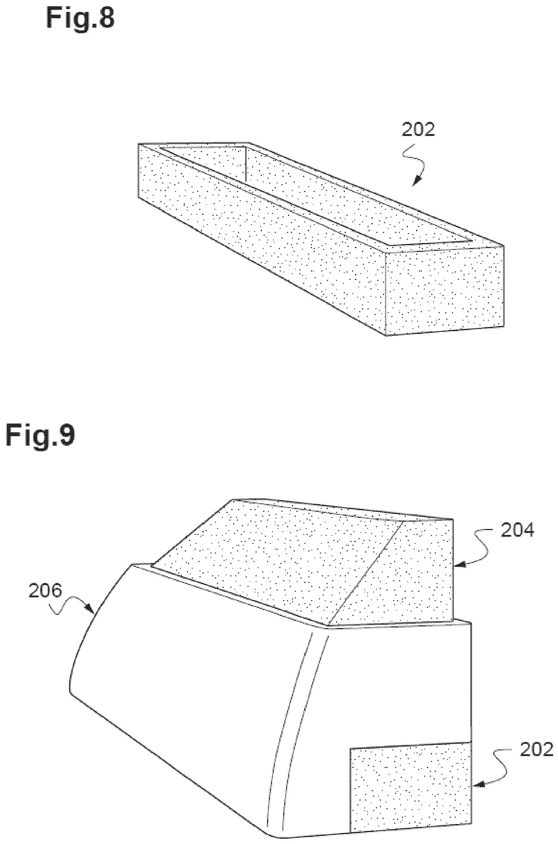

Figures 8 to 11 illustrate the construction of a lintel 200. A secondary zone 202 made of lightweight mortar, and shown in Figure 8, is first printed. This secondary zone 202 will serve in the further steps as a temporary support for the deposition of layers belonging to a primary zone.

Figure 9 shows a perspective view of the lintel 200 while it is being constructed: another secondary zone 204 has been printed and a primary zone 206 made of dense mortar is being printed. Some of the dense layers of the primary zone 206 are supported by the secondary zone 202. The secondary zone 204 is an infill, and also serves as a support for the deposition of dense layers, especially in the final part of the printing step, at the upper part of the lintel where it is curved.

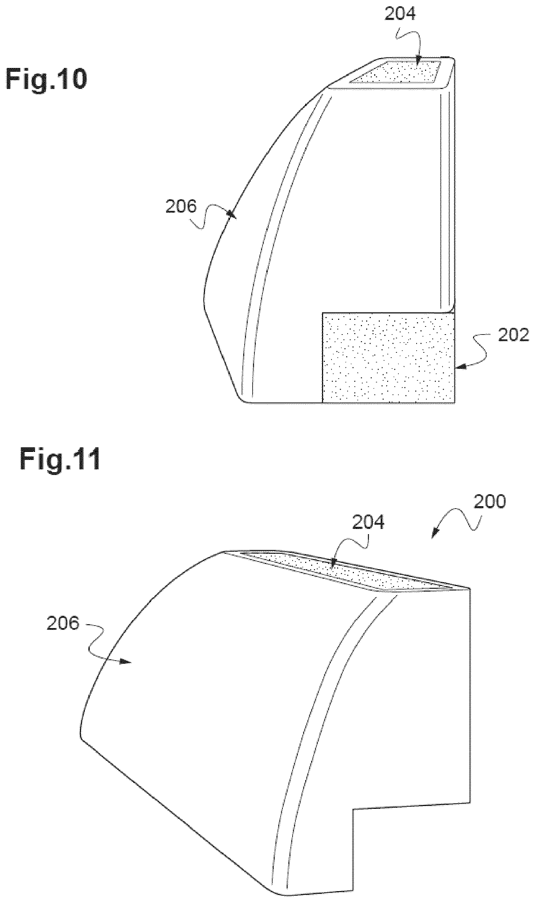

In Figures 10, the printing steps have been completed. After removal of the secondary zone 202, the final lintel 200 is shown in Figure 11.

## Claims

1. A 3-D printing method for manufacturing an element (1, 200) made of a material which comprises hydraulic binder and aggregates, said element comprising at least a primary zone (14, 206) and at least a secondary zone (16, 202, 204), the density of the material being higher in the or each primary zone (14, 206) than in the or each secondary zone (16, 202, 204), said method comprising mixing (22) a dry mortar composition with water to form a base wet mortar, conveying said base wet mortar towards a printer head (28) and, by moving said printer head, depositing superposed mortar layers (11, 12) to form said element (1, 200), wherein, before depositing the mortar layers, or the portions of mortar layers, that belong to the secondary zone (16, 202, 204), an aqueous foam is added to said base wet mortar during said conveying of the base wet mortar towards the printer head (28), and wherein at least part of the mortar layers, or portions of mortar layers, that belong to a secondary zone (16, 202, 204) support some of the mortar layers, or portions of mortar layers, that belong to a primary zone (14, 206).

2. The method of Claim 1, wherein the element is a wall (1) or part of a wall or a lintel (200).

3. The method according to any one of the preceding Claims, wherein the density of the material in the or each primary zone (14, 206) is 1400-2500 kg/m³ and the density of the material in the or each secondary zone (16, 202, 204) is 100-1000 kg/m³.

4. The method according to any one of the preceding Claims, further comprising removing at least part of the secondary zone(s) (16, 202), especially by mechanical means.

5. The method according to the preceding Claim, wherein the element is a wall or part of a wall (1) and removing at least part of the secondary zone (16) creates openings such as openings for a window (44) or for a door (42) .

6. The method according to any one of Claims 1 to 3, wherein at least part of the secondary zone forms an infill (204).

7. The method according to any one of Claims 1 to 4, wherein at least part of the secondary zone (16, 202) forms a temporary support for the deposition of layers belonging to the primary zone (14, 206) and wherein the method further comprises removing said temporary support.

8. The method according to any one of the preceding Claims, comprising depositing a plurality of mortar layers that comprise at least one portion belonging to a primary zone (14) and at least one portion belonging to a secondary zone (16).

9. The method according to Claims 1 to 7, comprising depositing a plurality of mortar layers belonging to a primary zone (14, 206) before or after depositing a plurality of mortar layers belonging to a secondary zone (16, 202, 204).

10. The method according to any one of the preceding Claims, wherein the hydraulic binder is selected from Ordinary Portland Cements (OPC), Calcium Aluminate Cements (CAC), Calcium Sulfoaluminate Cements (CSA), unhydrated lime, hydrated lime, ground granulated blast furnace slags, fly ashes and mixtures thereof.

11. The method according to any one of the preceding Claims, wherein the aggregates are selected from siliceous aggregates, calcareous aggregates and mixtures thereof.

12. The method according to any one of the preceding Claims, wherein the mixing ratio, i.e. the weight ratio between the amount of mixing water and the amount of dry mortar, is 0.05 to 0.50, especially 0.05 to 0.20.

13. The method according to any one of the preceding Claims, wherein, during the deposition of layers or portions of layers belong to the secondary zone (16, 202, 204), the ratio between the volume of added aqueous foam and the volume of base wet mortar is 0.5 to 15, in particular 1 to 12.

14. The method according to any one of the preceding Claims, wherein the aqueous foam is obtained by mixing water and a foaming agent or a foam stabilizing agent, then by introducing a gas, especially air, by stirring, bubbling or by injection under pressure.

15. An element, such as wall or part of a wall (1), obtainable by the method of any one of the preceding Claims.
